# EUROPÄISCHE PATENTSCHRIFT

(11) **EP 1 762 489 B1**
(45) Veröffentlichungstag und Bekanntmachung des Hinweises auf die Patenterteilung: **11.04.2012**
(21) Anmeldenummer: 06011161.4
(22) Anmeldetag: 31.05.2006
(51) Int. Cl.: B64D 11/06, B60N 2/46

(54) **Sitzsystem für Fahrzeuge zur Personenbeförderung, insbesondere für Luftfahrzeuge**
Seating system for aircraft
Système de siège pour aéronefs

(30) Priorität: 07.09.2005 DE 102005042376
(43) Veröffentlichungstag der Anmeldung: 14.03.2007
(73) Patentinhaber: Recaro Aircraft Seating GmbH & Co. KG, 74523 Schwäbisch Hall (DE)
(72) Erfinder: Baumann, Jürgen, 78351 Ludwigshafen (DE)
(74) Vertreter: Daub, Thomas

(56) Entgegenhaltungen:
- EP-A1- 0 294 086
- EP-B- 0 385 861
- DE-A1- 19 534 024
- GB-A- 2 288 973

## Beschreibung

Die Erfindung bezieht sich auf ein Sitzsystem für Fahrzeuge zur Personenbeförderung, insbesondere für Luftfahrzeuge, das zur Bildung einer Sitzreihe mehrere nebeneinander angeordnete Sitze aufweist, die seitlich durch die Sitzbreite bestimmende Armlehnen begrenzt sind, von denen zumindest eine an einen daneben liegenden Sitz angrenzende Armlehne für eine in Sitzquerrichtung erfolgende Lageeinstellung in Positionen, die unterschiedlichen Sitzbreiten entsprechen, mit einer Einstelleinrichtung zusammenwirkt, die ein eine Parallelogrammführung bildendes Hebelgetriebe mit zwei Gelenkhebeln aufweist, die jeder einerseits auf an der Tragstruktur der Sitzreihe befindlichen Schwenkachsen und andererseits auf mit der Armlehne verbundenen Schwenkachsen gelagert sind, wobei die Schwenkachsen zur Bildung des Parallelogramms zueinander parallel sind und sich in gleichen Abständen voneinander befinden.

Bekanntlich werden in Fahrzeugen zur Personenbeförderung, wie Luftfahrzeugen oder Fährschiffen, den Passagieren unterschiedliche Komfortklassen in entsprechend unterschiedlichen Fahrpreiskategorien angeboten. Dabei werden den Fahr- oder Fluggästen unterschiedlich gestaltete Sitze zur Verfügung gestellt, wobei bei den in der Luftfahrt üblichen Kategorien wie First-Class, Business-Class und Economy-Class sich insbesondere die Breite des jeweils zur Verfügung gestellten Sitzbereiches unterscheidet.

Es ist auch Stand der Technik, Sitzsysteme für derartige Einsatzzwecke so auszubilden, dass die Möglichkeit besteht, bei Sitzreihen mit mehreren nebeneinander liegenden Sitzen eine Umrüstung zur Anpassung an unterschiedliche Komfortklassen vorzunehmen. Beispielsweise offenbart die EP 0 385 861 B1 ein Sitzsystem der eingangs genannten Art, das in der Weise umrüstbar ist, dass nach Wunsch eine Sitzreihe mit drei nebeneinander liegenden Sitzen (beispielsweise für Economy-Class) oder eine Sitzreihe mit zwei Sitzen zur Verfügung steht, wobei im letzteren Fall die Breite des Sitzbereiches jeweils vergrößert ist und ein Tischelement in eine Gebrauchsstellung gebracht werden kann, in der es den Zwischenraum überspannt, der trotz der Vergrößerung der Sitzbereichsbreite zwischen den Sitzen verblieben ist.

Bei der bekannten Lösung ist die Parallelogrammführung derart ausgebildet, dass die Armlehnen für die Veränderung der Sitzbreite in einer Horizontalebene (bezogen auf die normale Einbaulage des Sitzsystemes) verschiebbar sind. Es ist daher erforderlich, für jede lageeinstellbare Armlehne eine Einrichtung vorzusehen, mittels deren die Armlehne gegen die im Betrieb auftretenden, in Sitzquerrichtung wirkenden Kräfte gesichert wird. Um eine hohe Betriebssicherheit zu gewährleisten ist hierfür ein entsprechend hoher Bauaufwand erforderlich.

GB 2 288 973 A stellt den nächstliegenden, bekannten Stand der Technik dar und zeigt die im Oberbegriff des unabhängigen Anspruchs 1 genannten Merkmale.

Im Hinblick auf diesen Stand der Technik stellt sich die Erfindung die Aufgabe, ein Sitzsystem zur Verfügung zu stellen, das sich durch eine einfache und robuste Bauweise auszeichnet, wobei gleichzeitig eine hohe Betriebssicherheit gewährleistet ist.

Bei einem Sitzsystem der eingangs genannten Art ist diese Aufgabe erfindungsgemäß dadurch gelöst, dass sich die Schwenkachsen der Parallelogrammführung in Sitzlängsrichtung und, bezogen auf die normale Einbauposition der Sitzreihe, zumindest näherungsweise horizontal erstrecken.

Bei dieser Art der Gestaltung der Parallelogrammführung kann die Anordnung derart getroffen sein, dass sich die Gelenkhebel sowohl in der der normalen Sitzbreite entsprechenden Einstellposition als auch in der der vergrößerten Sitzbreite entsprechenden Einstellposition jeweils in einer nach einer Seite hin oder nach der anderen Seite hin relativ zur Vertikalen geneigten Lage befinden, wobei die Armlehne sich bei beiden Einstellpositionen jeweils in der gewünschten Gebrauchshöhe befinden. Das Überführen der Armlehne von einer Einstellposition in die andere Einstellposition erfolgt daher nicht durch eine horizontale Verschiebung, sondern die Armlehne durchläuft eine bogenförmige Bewegungsbahn, die bis zum Erreichen der mittleren Zwischenposition, in der die Gelenkhebel der Parallelogrammführung vertikal sind, ansteigt und daraufhin bis zur anderen Einstellposition wieder abfällt. Dies bedeutet, dass die Armlehnen durch ihre Gewichtskraft und die auf die Armlehnen im Betrieb wirkenden Belastungen kraftschlüssig in der jeweiligen Einstellposition gehalten sind, so dass eine gesonderte Verriegelung entbehrlich ist.

In besonders vorteilhafter Weise kann die Parallelogrammführung so ausgelegt werden, dass die Parallelogrammführung bei Erreichen der jeweiligen, gewünschten Einstellposition ein selbsthemmendes Getriebe bildet. Hierfür kann vorgesehen sein, dass die Schwenkachsen der Parallelogrammführung an beiden Enden der Gelenkhebel in einer gemeinsamen Horizontalebene liegen und einen derartigen Abstand voneinander besitzen, dass die Gelenkhebel bei Erreichen der ersten und der zweiten Einstellposition der Armlehne jeweils aneinander liegend die jeweilige Endposition der Lageeinstellung der Armlehne definieren.

Bei besonders vorteilhaften Ausführungsbeispielen ist eine die gemeinsame Lageveränderung der einstellbaren Armlehnen bewirkende, mit der Einstelleinrichtung beider Armlehnen zusammenwirkende Koppeleinrichtung vorhanden. Ein solches Ausführungsbeispiel zeichnet sich durch besondere Benutzerfreundlichkeit aus, weil lediglich eine Armlehne bewegt werden muss, um eine Sitzreihe mit drei Sitzen in eine Sitzreihe mit zwei breiteren Sitzen umzurüsten oder umgekehrt.

Als Koppeleinrichtung kann eine Seilzuganordnung vorgesehen sein, beispielsweise in Form von Bowdenzügen, die eine Zugkraftübertragung zwischen Koppelkörpern ermöglichen, die wirkungsmäßig mit der Einstelleinrichtung der betreffenden Armlehnen verbunden sind. Hierbei kann die Anordnung so getroffen sein, dass die Einstelleinrichtung jeder Armlehne einen seiltrommelartigen Koppelkörper aufweist, der durch die Schwenkbewegungen der betreffenden Parallelogrammführung drehbar ist und der zu beiden Seiten der Drehachse dieser Drehbewegung je eine Angriffsstelle für ein Bowdenzugseil bildet. Die Bowdenzugseile sind zwischen den Angriffsstellen der Koppelkörper so geführt, dass derjenige Bowdenzug, der an einer dem äußeren Sitz der Sitzreihe zugewandten Angriffsstelle eines Koppelgliedes angreift, mit seinem anderen Ende an der dem mittleren Sitz zugewandten Angriffsstelle des Koppelgliedes angreift. Somit führt die Schwenkbewegung einer Parallelogrammführung jeweils zu einer gegensinnigen Schwenkbewegung der jeweils anderen Parallelogrammführung, so dass sich bei den Lageeinstellungen die Armlehnen jeweils gemeinsam aufeinander zu oder voneinander weg bewegen.

Um den Zwischenraum zu nutzen, der zwischen zwei Sitzen verbleibt, nachdem deren Sitzbreite vergrößert wurde, indem an den Zwischenraum angrenzende Armlehnen in einander angenäherte Einstellpositionen gebracht worden sind, kann ein Tischelement vorgesehen sein, das aus einer sich im Anlehnbereich der Rückenlehne des mittleren Sitzes befindlichen Verstaustellung in eine vom Anlehnbereich entfernte Gebrauchsstellung bewegbar ist, in der es eine näherungsweise horizontale Tischfläche bildet, wobei sich die lageeinstellbaren Armlehnen in ihrer zweiten Position entlang der Seitenränder des in Gebrauchsstellung befindlichen Tischelementes erstrecken.

Nachstehend ist die Erfindung anhand eines in der Zeichnung dargestellten Ausführungsbeispieles im einzelnen erläutert. Es zeigen:
- Fig. 1 eine stark schematisch vereinfacht und perspektivisch gezeichnete Rückansicht lediglich des mittleren Bereiches einer Sitzreihe gemäß einem Ausführungsbeispiel des erfindungsgemäßen Sitzsystemes, wobei lediglich die zum Verständnis der Erfindung wesentlichen Strukturelemente, teilweise abgebrochen und ohne Verkleidung, dargestellt sind;
- Fig. 2 eine gegenüber Fig. 1 in größerem Maßstab gezeichnete Teildarstellung lediglich der wesentlichen Bauelemente im Bereich einer lageeinstellbaren Armlehne, wobei sich diese in einer ersten von zwei nutzbaren Einstellpositionen befindet,
- Fig. 3 eine der Fig. 2 entsprechende Darstellung, wobei sich die Armlehne jedoch in ihrer zweiten Einstellposition befindet, und
- Fig. 4 eine in noch größerem Maßstab und schematisch vereinfacht gezeichnete Rückansicht einer lageeinstellbaren Armlehne mit zugehöriger Einstelleinrichtung entsprechend dem hier zu beschreibenden Ausführungsbeispiel des erfindungsgemäßen Sitzsystems.

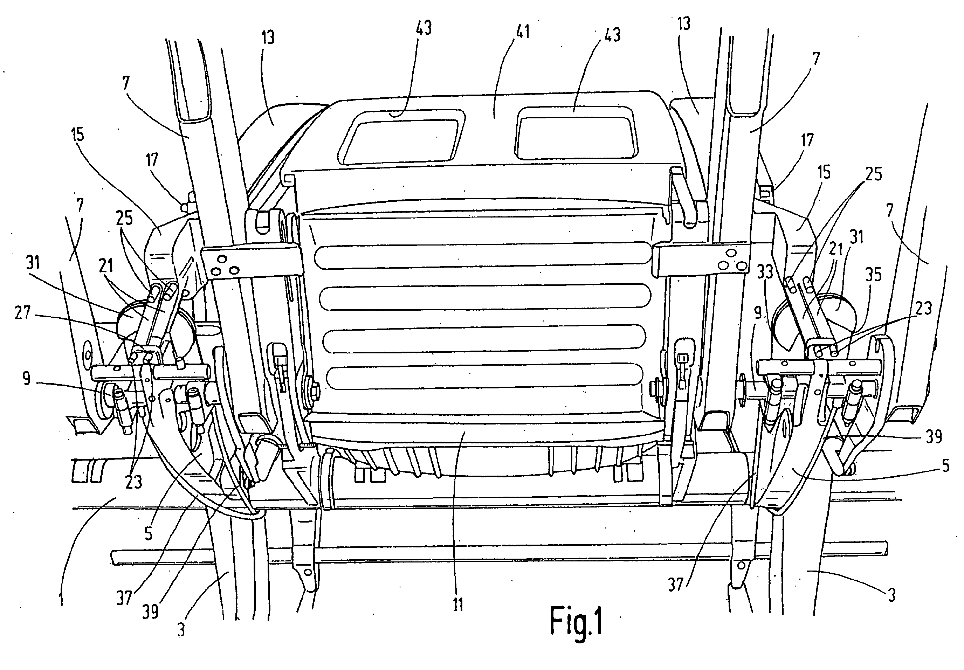

Fig. 1 zeigt den mittleren Bereich einer Sitzreihe mit drei nebeneinander liegenden Sitzen, wobei ein sich in Sitzquerrichtung erstreckender Tragholm 1 einen Hauptbestandteil der Tragstruktur bildet, die über Ständerbeine 3 auf einem nicht gezeigten Kabinenboden aufgeständert ist. An den mit dem Tragholm 1 verbundenen Strukturelementen 5 sind Rückenlehnenholme 7 an Neigungsachsen 9 zur Einstellung der Rückenlehnenneigung schwenkbar gelagert. Eine auf der Tragstruktur gelagerte Sitzschale des mittleren Sitzes ist mit 11 bezeichnet.

Von den zur Sitzreihe gehörenden Armlehnen sind in der Zeichnung lediglich die dem mittleren Sitz benachbarten, lageeinstellbaren Armlehnen 13 sichtbar. Diese Armlehnen 13 sind in Fig. 1 in einer Einstellposition gezeigt, in der sie voneinander den geringsten, in Sitzquerrichtung gemessenen Abstand aufweisen. Diese Einstellposition, die im vorliegenden Text als "zweite Position" bezeichnet ist, entspricht dem Betriebszustand der Sitzreihe, bei dem die Sitzbreite beider außenliegenden Sitze vergrößert ist, wobei also eine Sitzreihe mit ursprünglich drei Sitzen in eine Sitzreihe mit zwei Sitzen überführt ist, zwischen denen sich kein mittlerer Sitz, sondern ein anderweitig nutzbarer Zwischenraum befindet.

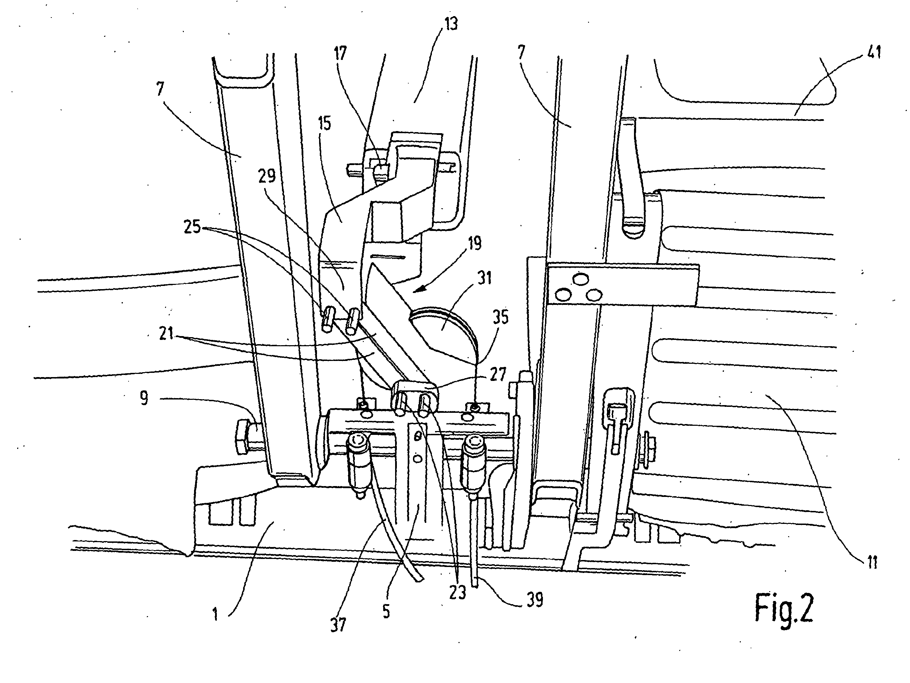

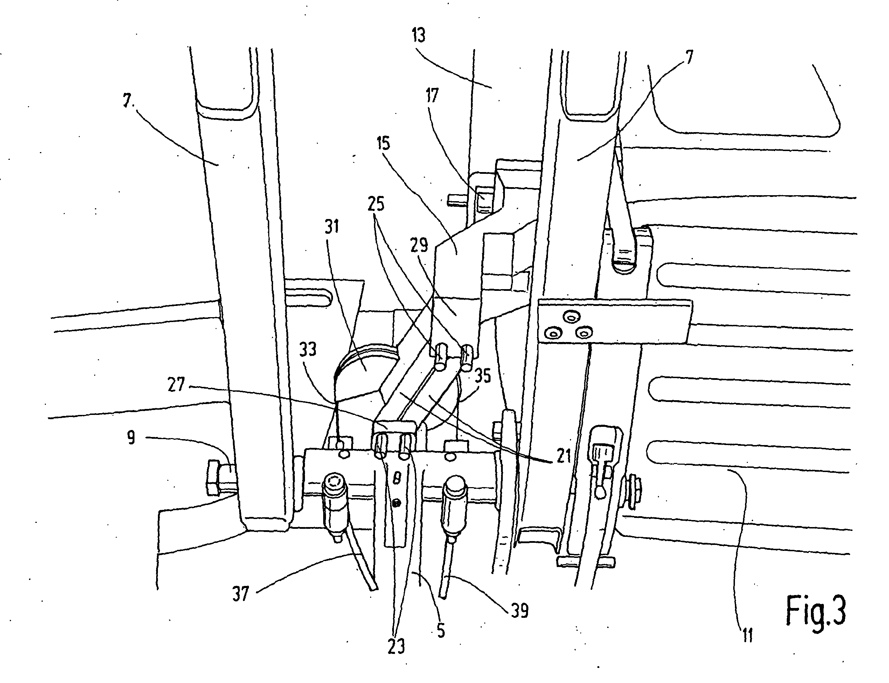

Fig. 3 zeigt ausschnittsweise die in Fig. 1 linksseitig gelegene Armlehne 13 in eben dieser zweiten Position, während Fig. 2 die gleiche Armlehne 13 in der ersten Position zeigt, in der sie keine Vergrößerung der Sitzbreiten der äußeren Sitze bildet, so dass in dieser ersten Position der Armlehne 13 zwischen den äußeren Sitzen ein mittlerer Sitz zur Verfügung steht, der die gleiche Sitzbreite wie die äußeren Sitze besitzt.

Jede lageeinstellbare Armlehne 13 ist an einem Armlehnenträger 15 angeordnet, der die Form eines abgekröpften Armes besitzt, an dessen einem Endbereich die eigentliche Armlehne an einem Klappgelenk 17 so gelagert ist, dass sie aus einer näherungsweise horizontalen Gebrauchslage zur (nicht gezeigten) Rückenlehne hochklappbar ist.

Der Armlehnenträger 15 bildet an seinem vom Klappgelenk 17 abgewandten Endbereich Teil einer als Ganzes mit 19 bezeichneten Parallelogrammführung mit zwei gleich ausgebildeten, die an ihren Hebelenden jeweils an strukturseitigen Parallelogramm-Schwenkachsen 23 und armlehnenseitigen Parallelogramm-Schwenkachsen 25 schwenkbar gelagert sind. Die strukturseitigen Schwenkachsen 23 verlaufen in einer gemeinsamen Horizontalebene horizontal und in Sitzlängsrichtung (Reiserichtung, Flugrichtung). Die armlehnenseitigen Schwenkachsen 25 verlaufen ebenfalls in gemeinsamer Horizontalebene parallel zu den strukturseitigen Schwenkachsen 23, wobei die armlehnenseitigen Schwenkachsen 25 gleiche Abstände voneinander aufweisen wie die strukturseitigen Schwenkachsen 23. Die strukturseitigen Schwenkachsen 23 befinden sich an einem Lagerteil 27 des festen Strukturelementes 5, während sich die armlehnenseitigen Schwenkachsen 25 an einem Endstück 29 des Armlehnenträgers 15 befinden, wobei im Endstück 29 eine nach unten offene Ausnehmung die oberen Endbereiche der Gelenkhebel 21 beweglich aufnimmt.

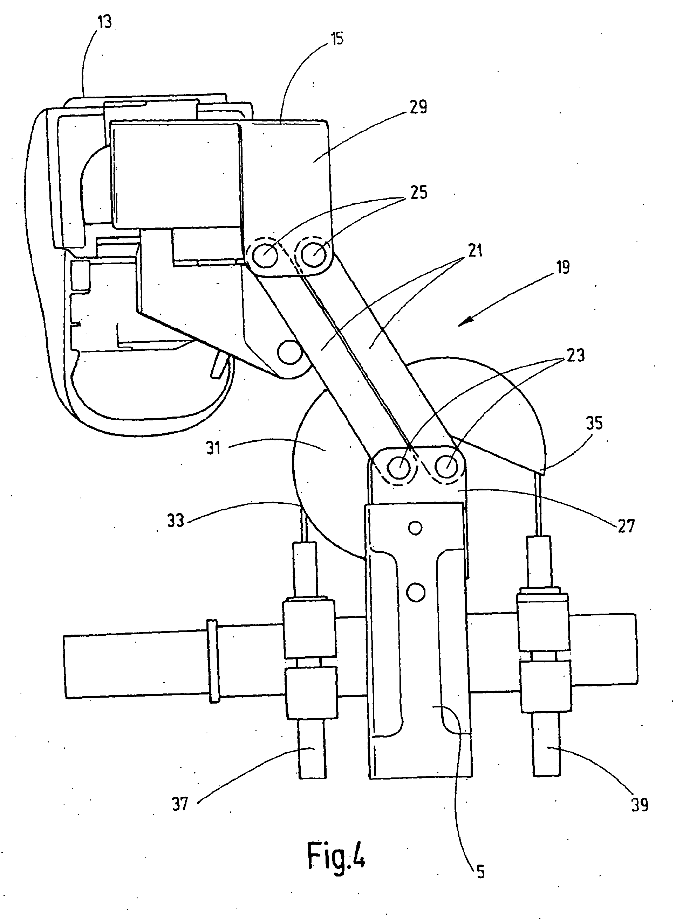

Fig. 2 und 4 zeigen die Parallelogrammführung 19 in dem der ersten Position entsprechenden Zustand, bei dem die Gelenkhebel 21, bei Blickrichtung entsprechend Fig. 2 und 4, aus der Vertikalposition entgegen dem Uhrzeigersinn nach links geneigt sind. Wie insbesondere aus Fig. 4 deutlich zu ersehen ist, liegen die Gelenkhebel 21 bei der in Fig. 4 gezeigten Dimensionierung (Breite der Gelenkhebel 21) und den gewählten Achsabständen der Schwenkachsen 23 und 25 in der in Fig. 2 und 4 gezeigten Position jeweils seitlich aneinander an, so dass die Parallelogrammführung 19 gegen eine weitere Schwenkbewegung entgegen dem Uhrzeigersinn selbsthemmend ist.

Wird die in Fig. 2 und 4 gezeigte Armlehne 13 aus der ersten Position in die zweite Position überführt, wobei die Parallelogrammführung 19 nunmehr im Uhrzeigersinn geschwenkt wird, ergibt sich eine Änderung der Höhenlage der Armlehne 13, die einen Höchststand besitzt, wenn die Gelenkhebel 21 vertikal sind, und sodann wieder abfällt, bis die zweite Position erreicht ist, die in Fig. 3 zeichnerisch dargestellt. In dieser zweiten Position liegen die Gelenkhebel 21 wiederum derart aneinander an, dass die Parallelogrammführung 19 gegen eine weiterführende Schwenkbewegung im Uhrzeigersinn selbsthemmend ist.

Da die Bewegung der jeweiligen Armlehne zwischen den genannten Betriebspositionen im Zuge einer Höhenänderung erfolgt, ist die Armlehne 13 in der ersten und der zweiten Position jeweils durch die Gewichstkraft der Armlehne 13 einschließlich der auf diese ausgeübten Betriebsbelastungen, gesichert.

Mittels einer Koppeleinrichtung zwischen den Einstelleinrichtungen der lageeinstellbaren Armlehne 13 führt eine Einstellbewegung einer Armlehne 13 zur entsprechenden Einstellbewegung der anderen Armlehne 13. Beim vorliegenden Beispiel ist an jeder Parallelogrammführung 19 ein seiltrommelartiger Koppelkörper 31 mit der Parallelogrammführung 19 so verbunden, dass der Koppelkörper 31 durch die Schwenkbewegungen der Parallelogrammführung 19 mitdrehbar ist. Jeder Koppelkörper 31 weist beidseits des Drehzentrums der Schwenkbewegungen der Parallelogrammführung, und damit der Drehbewegung des Koppelkörpers 31, je eine Angriffsstelle 33 und 35 auf, wobei sich, entsprechend der Blickrichtung der Fig., die Angriffsstelle 33 jeweils linksseitig in einem Abstand vom Drehzentrum befindet und sich die Angriffsstelle 35 jeweils rechtsseitig vom Drehzentrum befindet. Eine als Koppeleinrichtung vorgesehene Seilzuganordnung weist einen ersten Bowdenzug 37 und einen zweiten Bowdenzug 39 auf. Diese Bowdenzüge sind zwischen den Koppelkörpern 31 beider Parallelogrammführungen 19 so geführt, dass der an der linksseitig versetzten Angriffsstelle 33 angreifende Bowdenzug, beim Beispiel von Fig. 2 und 4 ist dies der Bowdenzug 37, mit seinem zweiten Ende an der ebenfalls linksseitig versetzten Angriffsstelle 33 des anderen Koppelkörpers 31 angreift und dass der in Fig. 4 an der rechtsseitig versetzten Angriffsstelle 35 des Koppelkörpers 33 angreifende Bowdenzug 39 am jeweils anderen Koppelkörper 31 ebenfalls an der rechtsseitig versetzten Angriffsstelle 35 angreift. Auf diese Weise führt eine Einstellbewegung einer Armlehne 13 zu einer synchronen Einstellbewegung der jeweils anderen Armlehne 13, wobei der Koppelkörper 31 der anderen Armlehne um gleiche Drehwinkel, jedoch im entgegengesetzten Drehsinn, mitgedreht wird.

Um den zwischen den in der zweiten Position befindlichen Armlehne 13 verbleibenden Zwischenraum zu nutzen, kann ein Tischelement 41 vorgesehen sein, das aus einer Verstaustellung (nicht gezeigt), in der es an die Rückenlehne des mittleren Sitzes angeklappt ist und beispielsweise einen Teil des Polsterbereiches der Rückenlehne bildet, in eine in Fig. 1 gezeigte Gebrauchsstellung schwenkbar ist. Wie Fig. 1 zeigt, erstreckt sich das Tischelement 41 zwischen den in der zweiten Position befindlichen Armlehne 13, so dass zwischen diesen eine Tischfläche gebildet wird, in der muldenartige Vertiefungen 43 zur Bildung umgrenzter Stellflächen vorgesehen sein können.

Wenn gewünscht, kann eine zweite Koppeleinrichtung vorgesehen sein, die aufgrund der Einstellbewegung beim Überführen der Armlehne 13 in die zweite Position, eine Stellbewegung für das bewegliche Tischelement 41 erzeugt, um dieses selbsttätig aus der Verstaustellung in die Gebrauchsstellung überzuführen oder um eine Stellbewegung auszulösen, die beim Überführen der Armlehnen 13 aus der zweiten Position in die erste Position das Tischelement 41 in die Verstaustellung zurück bringt.

## Patentansprüche

1. Sitzsystem für Fahrzeuge zur Personenbeförderung, insbesondere für Luftfahrzeuge, das zur Bildung einer Sitzreihe mehrere nebeneinander angeordnete Sitze aufweist, die seitlich durch die Sitzbreite bestimmende Armlehnen (13) begrenzt sind, von denen zumindest eine an einen daneben liegenden Sitz angrenzende Armlehne (13) für eine in Sitzquerrichtung erfolgende Lageeinstellung in Positionen, die unterschiedlichen Sitzbreiten entsprechen, mit einer Einstelleinrichtung zusammen wirkt, die ein eine Parallelogrammführung (19) bildendes Hebelgetriebe mit zwei Gelenkhebeln (21) aufweist, die jeder einerseits auf an einer Tragstruktur (1, 5) der Sitzreihe befindlichen Schwenkachsen (23) und andererseits auf mit der Armlehne (13) verbundenen Schwenkachsen (23) gelagert sind, wobei die Schwenkachsen (23, 25) zur Bildung des Parallelogramms zueinander parallel sind, sich in gleichen Abständen voneinander befinden und sich in Sitzlängsrichtung und, bezogen auf die normale Einbauposition der Sitzreihe, zumindest näherungsweise horizontal erstrecken, **dadurch gekennzeichnet, dass** die Schwenkachsen (23, 25) der Parallelogrammführung (19) an beiden Enden der Gelenkhebel (21) in je einer gemeinsamen Horizontalebene liegen und einen derartigen Abstand voneinander besitzen, dass die Gelenkhebel (21) bei Erreichen einer ersten und einer zweiten Position der Armlehne (13) jeweils aneinander liegend eine jeweilige Endposition der Lageeinstellung der Armlehne (13) definieren.

2. Sitzsystem nach Anspruch 1, **dadurch gekennzeichnet, dass** es eine Sitzreihe mit drei nebeneinander liegenden Sitzen bildet und dass beide an den mittleren Sitz angrenzenden Armlehnen (13) zwischen der ersten Position, die den drei nebeneinander liegenden Sitzen mit einander angeglichenen Sitzbreiten entspricht, und der zweiten Position lageeinstellbar sind, in der die Armlehnen (13) zur Vergrößerung der Sitzbreite der beiden außen liegenden Sitze einander angenähert sind.

3. Sitzsystem nach Anspruch 2, **dadurch gekennzeichnet, dass** eine die gemeinsame Lageveränderung der Armlehnen (13) bewirkende, mit der Einstelleinrichtung beider Armlehnen (13) zusammenwirkende Koppeleinrichtung (31, 37, 39) vorhanden ist.

4. Sitzsystem nach Anspruch 3, **dadurch gekennzeichnet, dass** die Einstelleinrichtung beider lageeinstellbaren Armlehnen (13) je einen durch die jeweiligen Schwenkbewegungen der Parallelogrammführungen (19) verdrehbaren, seiltrommelartigen Koppelkörper (31) aufweist und dass eine Seilzuganordnung (37, 39) als Bestandteil der Koppeleinrichtung vorhanden ist, die die Drehbewegung jeweils eines Koppelkörpers (31) in eine Drehbewegung des jeweils anderen Koppelkörpers (31) um gleichen Drehwinkel jedoch in umgekehrtem Drehsinn umsetzt.

5. Sitzsystem nach Anspruch 4, **dadurch gekennzeichnet, dass** der seiltrommelartige Koppelkörper (31) an jeder Parallelogrammführung (19) je eine zu beiden Seiten der Drehachse des Koppelkörpers (31) gelegene Angriffstelle (33, 35) für die Seilzuganordnung aufweist und dass diese durch zwei Bowdenzüge (37, 39) gebildet ist, die zwischen den Koppelkörpern (31) derart geführt sind, dass derjenige Bowdenzug, der mit einem Ende an einer dem äußeren Sitz der Sitzreihe zugewandten Angriffsstelle eines Koppelgliedes (31) angreift, mit seinem anderen Ende an der dem mittleren Sitz zugewandten Angriffsstelle des anderen Koppelgliedes (31) angreift.

6. Sitzsystem nach einem der Ansprüche 1 bis 5, **dadurch gekennzeichnet, dass** das der Armlehne (13) zugewandte Ende der Parallelogrammführung (19) mittels der Parallelogramm-Schwenkachsen (25) an einem Armlehnenträger (15) angelenkt ist, an dem die Armlehne (13) um eine horizontale, in Sitzquerrichtung verlaufende Achse (17) zur Rückenlehne hin hochklappbar gelagert ist.

7. Sitzsystem nach einem der Ansprüche 2 bis 6, **dadurch gekennzeichnet, dass** ein Tischelement (41) vorgesehen ist, das aus einer sich im Anlehnbereich der Rückenlehne des mittleren Sitzes befindlichen Verstaustellung in eine vom Anlehnbereich entfernte Gebrauchsstellung bewegbar ist, in der es eine näherungsweise horizontale Tischfläche bildet, und dass sich die lageeinstellbaren Armlehnen (13) in ihrer zweiten Position entlang der Seitenränder des in Gebrauchsstellung befindlichen Tischelementes (41) erstrecken.

## Claims

1. Seating system for vehicles for conveying people, in particular for aircraft, which has, in order to form a row of seats, a plurality of seats which are arranged next to one another and are bounded laterally by armrests (13) which determine the seat width and of which at least one armrest (13) which is adjacent to the seat located next thereto interacts, for the purpose of positional adjustment which takes place in a transverse direction of the seat, into positions which correspond to different seat widths, with an adjusting device which has a lever gear which forms a parallelogram guide (19) and has two articulated levers (21) each of which is supported, at one end, on pivot spindles (23) located at a supporting structure (1, 5) of the row of seats and, at the other end, on pivot spindles (25) connected to the armrest (13), wherein the pivot spindles (23, 25) are parallel to one another in order to form the parallelogram, are located at equal distances from one another and extend at least approximately horizontally, as seen in the longitudinal direction of the seat and with respect to a normal installation position of the row of seats, **characterized in that** the pivot spindles (23, 25) of the parallelogram guide (19) each lie in a shared horizontal plane at both ends of the articulated levers (21) and are located at such a distance from each other that, when a first and a second position of the armrest (13) is reached, each of the articulated levers (21) lying adjacent to each other defines a respective final position of the positional adjustment of the armrest (13).

2. Seating system according to Claim 1, **characterized in that** said seating system forms a row of seats with three seats located next to one another, and **in that** both armrests (13) which are adjacent to the central seat can be positionally adjusted between the first position, which corresponds to the three seats located next to one another and having seat widths matched to one another, and the second position, in which the armrests (13) have been approached to each other in order to enlarge the seat width of the two outer seats.

3. Seating system according to Claim 2, **characterized in that** there is a coupling device (31, 37, 39) which brings about the joint change in position of the armrests (13) and interacts with the adjusting device of the two armrests (13).

4. Seating system according to Claim 3, **characterized in that** the adjusting device of both positionally adjustable armrests (13) has for each armrest (13) a cable-drum-like coupling body (31) which is rotatable by the respective pivoting movements of the parallelogram guides (19), and **in that** there is a cable pull arrangement (37, 39) as part of the coupling device, said cable pull arrangement converting the rotational movement of each coupling body (31) into a rotational movement of the other coupling body (31) by the same angle of rotation, but in reverse direction of rotation.

5. Seating system according to Claim 4, **characterized in that** each cable-drum-like coupling body (31) at each parallelogram guide (19) has, for the angle pull arrangement, one engagement point (33, 35) placed on either side of the axis of rotation of the coupling body (31), and **in that** said cable pull arrangement is formed by two Bowden cables (37, 39) which are guided between the coupling bodies (31) in such a manner that the Bowden cable engaging at one end with an engagement point of a coupling body (31), the engagement point facing the outer seat of the row of seats, engages with its other end with the engagement point of the other coupling body (31), said engagement point facing the central seat.

6. Seating system according to one of Claims 1 to 5, **characterized in that** the end of the parallelogram guide (19) which faces the armrest (13) is articulated, by means of the parallelogram pivot spindles (25), to an armrest support (15) on which the armrest (13) is supported so as to be foldable upwards towards the backrest about a horizontal axis (17) running in the transverse direction of the seat.

7. Seating system according to one of Claims 2 to 6, **characterized in that** a table element (41) is provided, which table element (41) can be moved from a storage position located in the lean-against region of the backrest of the central seat into a use position which is remote from the lean-against region and in which said table element forms an approximately horizontal table surface, and **in that** the positionally adjustable armrests (13) extend in their second position along the side edges of the table element (41) in the use position.

## Revendications

1. Système de siège pour des véhicules destinés au transport de voyageurs, en particulier pour des aéronefs, qui présente, pour former une rangée de sièges, plusieurs sièges juxtaposés, qui sont délimités latéralement par des accoudoirs (13) déterminant la largeur du siège, dont au moins un accoudoir (13) adjacent à un siège juxtaposé coopère, pour un réglage de position opéré dans la direction transversale du siège dans des positions qui correspondent à différentes largeurs du siège, avec un dispositif d'ajustement qui présente une transmission aux leviers formant un guidage parallélogramme (19) avec deux leviers articulés (21), qui sont chacun montés d'une part sur des axes de pivotement (23) se trouvant sur une structure portante (1, 5) de la rangée de sièges et d'autre part sur des axes de pivotement (25) reliés à l'accoudoir (13), les axes de pivotement (23, 25), pour former le parallélogramme, étant parallèles l'un à l'autre, se trouvant à des distances égales l'un de l'autre et s'étendant dans la direction longitudinale du siège et au moins à peu près horizontalement, par rapport à la position normale de montage de la rangée de sièges, **caractérisé en ce que** les axes de pivotement (23, 25) du guidage parallélogramme (19) situés aux deux extrémités des leviers articulés (21) se trouvent chaque fois dans un plan horizontal commun et présentent l'un par rapport à l'autre une distance telle que les leviers articulés (21) définissent en s'appliquant chaque fois l'un à l'autre une position finale respective du réglage de position de l'accoudoir (13) lorsqu'une première position et une deuxième position de l'accoudoir (13) sont atteintes.

2. Système de siège selon la revendication 1, **caractérisé en ce qu'**il forme une rangée de sièges avec trois sièges juxtaposés et **en ce que** les deux accoudoirs (13) adjacents au siège central sont réglables en position entre la première position, qui correspond aux trois sièges juxtaposés avec des largeurs de siège égalèes l'une à l'autre, et la deuxième position, dans laquelle les accoudoirs (13) sont rapprochés l'un de l'autre pour augmenter la largeur de siège des deux sièges situés à l'extérieur.

3. Système de siège selon la revendication 2, **caractérisé en ce qu'**il se trouve un dispositif de couplage (31, 37, 39) coopérant avec le dispositif d'ajustement des deux accoudoirs (13) et provoquant le changement de position commun des accoudoirs (13).

4. Système de siège selon la revendication 3, **caractérisé en ce que** le dispositif d'ajustement des deux accoudoirs (13) réglables en position présente pour chaque accoudoir (13) un corps de couplage (31) en forme de tambour à câble, étant torsibles par les mouvements pivotants respectifs des guidages parallélogramme (19), et **en ce qu'**il se trouve un dispositif de commande par câble (37, 39) faisant partie du dispositif de couplage, le dispositif de commande par câble convertant le mouvement rotatif respectivement d'un corps de couplage (31) en un mouvement rotatif de l'autre corps de couplage (31) sous le même angle de rotation mais dans le sens de rotation inverse.

5. Système de siège selon la revendication 4, **caractérisé en ce que** le corps de couplage en forme de tambour à câble (31) installé à chaque guidage parallélogramme (19) présente, situé sur les deux côtés du corps de couplage (31), chaque fois un point d'accrochage (33, 35) pour le dispositif de commande par câble, et **en ce que** celui-ci est formé par deux câbles Bowden (37, 39) guidés entre les corps de couplage (31) de telle manière que le câble Bowden, qui est accroché par une extrémité à un point d'accrochage d'un corps de couplage (31), ledit point d'accrochage étant tourné vers le siège extérieur de la rangée de sièges, soit accroché par son autre extrémité au point d'accrochage de l'autre corps de couplage (31), ledit point d'accrochage étant tourné vers le siège central.

6. Système de siège selon l'une quelconque des revendications 1 à 5, **caractérisé en ce que** l'extrémité du guidage parallélogramme (19) tournée vers l'accoudoir (13) est articulée au moyen des axes de pivotement (25) du parallélogramme à un support d'accoudoir (15), sur lequel l'accoudoir (13) est monté de façon relevable vers le dossier autour d'un axe horizontal (17) s'étendant dans la direction transversale du siège.

7. Système de siège selon l'une quelconque des revendications 2 à 6, **caractérisé en ce qu'**il est prévu un élément de table (41), qui est déplaçable d'une position de rangement se trouvant dans la zone d'appui du dossier du siège central à une position d'utilisation distante de la zone d'appui, dans laquelle il forme une surface de table à peu près horizontale, et **en ce que** les accoudoirs réglables en position (13) s'étendent dans leur deuxième position le long des bords latéraux de l'élément de table (41) se trouvant dans la position d'utilisation.
